# EUROPEAN PATENT APPLICATION

(11) **EP 4 503 408 A1**
(43) Date of publication of application: **05.02.2025**
(21) Application number: 23774522.9
(22) Date of filing: 07.03.2023
(51) Int. Cl.: H02K 15/12

(54) **STATOR MANUFACTURING METHOD**

(30) Priority: 24.03.2022 JP 2022049064
(71) Applicant: NHK Spring Co., Ltd., Kanagawa 236-0004 (JP)
(72) Inventor: NISHIWAKI, Naruhiko, Yokohama-shi, Kanagawa 236-0004 (JP); ITO, Keiichi, Yokohama-shi, Kanagawa 236-0004 (JP)
(74) Representative: DREISS Patentanwälte PartG mbB
(86) International application number: PCT/JP2023/008678
(87) International publication number: WO 2023/181923

(57) **Abstract**

A stator manufacturing method of the present disclosure includes a step of providing a stator assembly including a stator core having coils wound on plural teeth projecting from a yoke and a case surrounding an outer periphery of the stator core, a step of arranging a ring-shaped resin member at least at one end portion in an axial direction of the case such that at least part of the resin member is crushed when pressed by a mold, a step of clamping the stator assembly inside the mold with the resin member arranged at the at least one end portion in a state in which the resin member is pressed, and a step of injecting a molding resin into the mold.

## Description

### Technical Field

The present disclosure relates to a stator manufacturing method.

### Background Art

Resin molding (resin sealing) for heat dissipation and insulation is performed to an inner face of a stator configuring a rotary electrical machine, for example an induction motor (see, for example, Japanese Patent Application Laid-Open (JP-A) No. S60-002044). When such resin molding is performed, generally the resin molding is performed by housing a stator assembly that contains a stator core wound with coils and a case covering the outer periphery of the stator core inside a mold, and injecting an insulating resin composition (hereafter referred to as a "molding resin") inside the mold in a state pressed against both axial direction end portions of the stator assembly.

### SUMMARY OF INVENTION

### Technical Problem

When performing resin molding with the method described above, were a gap to develop between the mold and the case then this might be a cause of resin leakage during molding resin injection. Moreover, due to the mold being pressed against the case, the product height of the stator assembly depends on the dimension of the case. In consideration thereof, a high dimensional accuracy without even slight warping or undulations is demanded when manufacturing the case.

In consideration of the above circumstances, an object of the present disclosure is to provide a stator manufacturing method capable of suppressing variation in product height and resin leakage without demanding a high dimensional accuracy during component manufacture.

### Solution to Problem

In order to achieve the above object, a stator manufacturing method according to a first aspect of the present disclosure includes a step of providing a stator assembly including a stator core having coils wound on plural teeth projecting from a yoke, and a case surrounding an outer periphery of the stator core, a step of arranging a ring-shaped resin member at least at one end portion in an axial direction of the case such that at least part of the resin member is crushed when pressed by a mold, a step of clamping the stator assembly inside the mold with the resin member arranged at the at least one end portion in a state in which the resin member is pressed, and a step of injecting a molding resin into the mold.

In the stator manufacturing method such as described above, the resin member is pressed and clamped by the mold prior to injecting the molding resin to proper locations on the stator assembly, with this meaning that a gap does not develop between the mold and the resin member, and the molding resin does not leak to the stator assembly outside. Moreover, due to the resin member being crushed, the dimension of the stator assembly after molding resin injection can be matched to the desired product dimension merely by forming the mold to match the desired product dimension, and variation in product dimension can be suppressed.

A stator manufacturing method according to a second aspect of the present disclosure is the stator manufacturing method according to the first aspect of the present disclosure, wherein the resin member is configured from a thermoplastic resin, and a step is further included of pre-heating at least part of the mold including a portion that will contact the resin member.

In the stator manufacturing method as described above, the crush portion can be softened and crushed using a simple method of causing the pre-heated mold to contact the resin member.

A stator manufacturing method according to a third aspect of the present disclosure is the stator manufacturing method according to the first aspect or the second aspect of the present disclosure, wherein the resin member is a bus-bar unit, and the stator assembly includes plural bus-bars having one end portions electrically connected to end portions of the coils, with the bus-bars having other end portions that extend outside the stator assembly through the resin member.

In the stator manufacturing method as described above, part of the bus-bar unit can be reused as the resin member, with this enabling the number of components to be reduced.

A stator manufacturing method according to a fourth aspect of the present disclosure is the stator manufacturing method according to any one of the first aspect to the third aspect of the present disclosure, wherein the resin member includes a first ring-shaped projection formed at least at one or other face from out of a face that contacts the case or a face on the opposite side to the face that contacts the case.

In the stator manufacturing method such as described above, a liquid-tight state can be reliably achieved at least at one out of the contact portion between the resin member and the mold, or the contact portion between the resin member and the case, thereby enabling resin leakage to be more reliably suppressed.

A stator manufacturing method according to a fifth aspect of the present disclosure is the stator manufacturing method according to any one of the first to fourth aspects of the present disclosure, wherein the case includes a second ring-shaped projection at a face that contacts the resin member.

In the stator manufacturing method as described above, the second ring-shaped projection provided to the case actively deforms the resin member, thereby enabling a liquid-tight state to be reliably achieved between the case and the resin member.

A stator manufacturing method according to a sixth aspect of the present disclosure is the stator manufacturing method according to any one of the first aspect to the fifth aspect of the present disclosure, wherein the resin member includes a tongue piece that extends along an inner peripheral face of the case, and an indentation able to accommodate entry of a leading end portion of the tongue piece is provided to an inner peripheral face of the case, and a step is further included of using the mold to press the resin member against the case and to fit a leading end of the tongue piece into the indentation.

The stator manufacturing method as described above is configured to enable fixing between the case and the resin member to be performed at the same time as the stator assembly is being clamped by the mold.

A stator manufacturing method according to a seventh aspect of the present disclosure is the stator manufacturing method of any one out of the first aspect to the sixth aspect of the present disclosure, wherein the case is configured from a resin, and the resin member is part of the case.

In the stator manufacturing method as described above, the resin member forms part of the case, and so there is no need to separately prepare the resin member.

The stator manufacturing method according to the eighth aspect of the present disclosure includes a step of providing a stator assembly including a stator core having coils wound on plural teeth projecting from a yoke, a step of arranging a ring-shaped resin member at least at one end portion in an axial direction of the stator core such that at least part of the resin member is crushed when pressed by a mold, a step of clamping the stator assembly inside the mold with the resin member arranged at the at least one end portion in a state in which the resin member is pressed, and a step of injecting a molding resin into the mold.

In the stator manufacturing method as described above, the resin member is pressed and clamped by the mold prior to injecting molding resin to proper locations on the stator assembly, with this meaning that a gap does not develop between the mold and the resin member, and the molding resin does not leak to the stator assembly outside. Moreover, the resin member is crushed, and so the dimension of the stator assembly after molding resin injection can be matched to the desired product dimension merely by forming the mold to match the desired product dimension, and variation in product dimension can be suppressed.

A stator manufacturing method according to a ninth aspect of the present disclosure is the stator manufacturing method according to the eighth aspect of the present disclosure, wherein the mold includes an upper mold and a lower mold, and the resin member includes a ring-shaped rib that is provided on an outer peripheral face of the resin member and that is directly clamped between the upper mold and the lower mold when clamped inside the mold.

In the stator manufacturing method as described above, a structure is adopted in which the ring-shaped rib is directly clamped by the upper mold and the lower mold, with this meaning that a liquid-tight state can be achieved between the mold and the resin member without separate preparation of a case to cover the stator core.

The stator manufacturing method of the present disclosure is configured so as to enable variation in product height and resin leakage to be suppressed without demanding high dimensional accuracy during component manufacture.

### BRIEF DESCRIPTION OF DRAWINGS

Fig. 1 is a perspective view illustrating an example of a stator assembly employed in a stator manufacturing method according to a first exemplary embodiment of the present disclosure.
Fig. 2 is a perspective view illustrating an attached state of a resin member to the stator assembly illustrated in Fig. 1.
Fig. 3 is a cross-section sectioned along ling A-A of Fig. 2.
Fig. 4 is a schematic cross-section illustrating an example of a device to execute the stator manufacturing method according to the first exemplary embodiment of the present disclosure.
Fig. 5 is a flowchart illustrating an example of the stator manufacturing method according to the first exemplary embodiment of the present disclosure.
Fig. 6A is an expanded view on arrow B of Fig. 4.
Fig. 6B is an expanded view on arrow B of Fig. 4.
Fig. 7 is a cross-section illustrating a state after resin molding has been performed on the stator assembly illustrated in Fig. 3.
Fig. 8A is an expanded view that corresponds to Figs. 6 and illustrates a first modified example of the method according to the first exemplary embodiment.
Fig. 8B is an expanded view that corresponds to Figs. 6 and illustrates the first modified example of the method according to the first exemplary embodiment.
Fig. 9 is an expanded view that corresponds to Figs. 6 and illustrates a second modified example of the method according to the first exemplary embodiment.
Fig. 10 is an expanded view that corresponds to Figs. 6 and illustrates a third modified example of the method according to the first exemplary embodiment.
Fig. 11A is an expanded view that corresponds to Figs. 6 and illustrates a fourth modified example of the method according to the first exemplary embodiment.
Fig. 11B is an expanded view that corresponds to Figs. 6 and illustrates the fourth modified example of the method according to the first exemplary embodiment.
Fig. 12A is an expanded view that corresponds to Figs. 6 and illustrates an example of a device to execute the stator manufacturing method according to the second exemplary embodiment of the present disclosure.
Fig. 12B is an expanded view that corresponds to Figs. 6 and illustrates an example of a device to execute the stator manufacturing method according to the second exemplary embodiment of the present disclosure.
Fig. 13 is a schematic cross-section that corresponds to Fig. 4 and illustrates a device to execute the stator manufacturing method according to one modified example of the second exemplary embodiment of the present disclosure.

### DESCRIPTION OF EMBODIMENTS

The present application is based on Japanese Patent Application 2022-049064 filed March 24, 2022, and the content thereof forms part of the content of the present application.

The present disclosure will become more fully understood from the detailed description given hereinbelow. Further range of application of the present disclosure will become clearer from the detailed description given hereinbelow. However, the detailed description and the specific embodiment are illustrated of desired embodiments of the present disclosure and are described only for the purpose of explanation. Various changes and modifications will be apparent to those ordinary skilled in the art on the basis of the detailed description.

The applicant has no intention to give to public any disclosed embodiment. Among the disclosed changes and modifications, those which may not literally fall within the scope of the patent claims constitute, therefore, a part of the present invention in the sense of doctrine of equivalents.

Description follows regarding exemplary embodiments for implementing the present disclosure, with reference to the drawings. Note that areas needed to explain how an object of the present disclosure is achieved are schematically illustrated below, with areas needed to explain such portions of the present disclosure mainly described, and areas that are omitted from explanation being known technology. Moreover, sometimes in cases in which the same or plural of equivalent members are contained in the respective drawings, reference numerals will only be appended to some thereof in order to simplify the appearance of the drawings.

### First Exemplary Embodiment

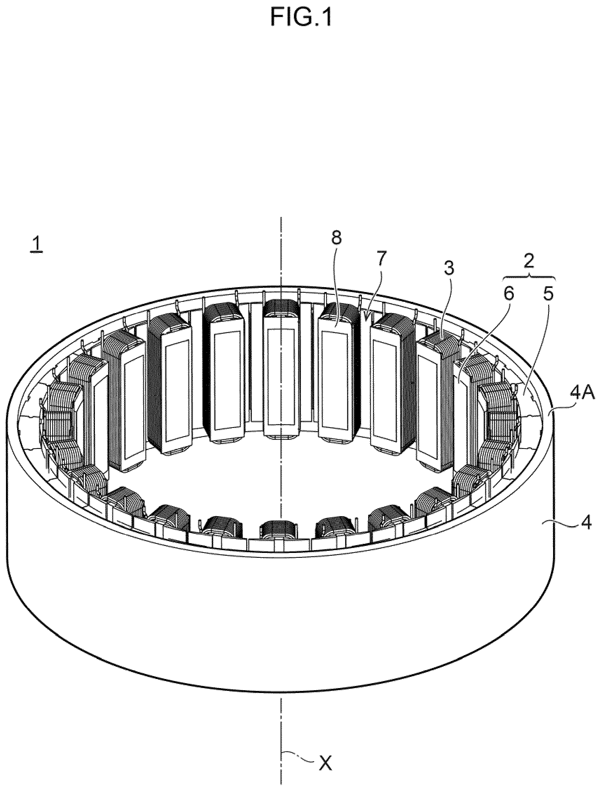

Fig. 1 is a perspective view illustrating an example of a stator assembly employed in the stator manufacturing method according to a first exemplary embodiment of the present disclosure. The stator manufacturing method according to the present exemplary embodiment may mainly be employed to execute resin molding on part of a stator assembly 1 configuring part of an inner rotor type motor, as illustrated in Fig. 1. The stator assembly 1 includes, as illustrated in Fig. 1, at least a stator core 2, coils 3, and a case 4. Note that the stator assembly may configure part of a motor other than an inner rotor type motor such as, for example, an axial type motor. The inner rotor type motor may, for example, be a three-phase motor.

The stator core 2 may be configured by stacking plural sheets of iron core pieces (core pieces) each configured from an electromagnetic steel sheet. The stator core 2 may be configured as a ring-shaped member having a center axis X, and may include a yoke 5 formed in a ring shape, for example a circular cylinder shape, and plural (24 in Fig. 1) teeth 6 that project toward the inside from the inner peripheral face of the yoke 5. The plural teeth 6 are formed at a substantially uniform spacing from each other in a row along the circumferential direction of the stator core 2, and slots 7 may be respectively formed between adjacent of the teeth 6. Note that the number of poles and the number of slots of the stator assembly 1 illustrated in Fig. 1 is merely an example thereof, and there is no limitation thereto. Moreover, an extension direction of the center axis X will sometimes simply be referred to as "axial direction" below.

The coils 3 may be spirally wound around the plural teeth 6. An insulator 8 may be interposed between each of the coils 3 and each of the teeth 6. The coils 3 may, for example, be configured from a wire made from a wire member of copper, aluminum, silver, or an alloy thereof, covered by an insulating covering film of enamel or the like. The wire is illustrated for an example of a round wire in Fig. 1, however a fattened angular wire, a hexagonal wire, or the like may be employed. The same number of coils 3 may be included as coils for each of the three-phases (specifically the U-phase, V-phase, and W-phase).

Moreover, these coils 3 are wound around the periphery of the teeth 6 so as to form substantially elongated rectangular shapes having long sides along the axial direction of the stator core 2 when viewed along a radial direction of the stator core 2. A coil end 3A configuring and end portion of each of the coils 3 may be pulled out from one axial direction end of each of the slots 7 toward the slot 7 outside. In the present exemplary embodiment, the coils 3 are illustrated for an example configured by winding a single strand of electric wire, however plural strands of the electric wire may be wound. Moreover, instead of the insulator 8 described above, another insulating member may be employed therefor, such as for example insulating paper or wax.

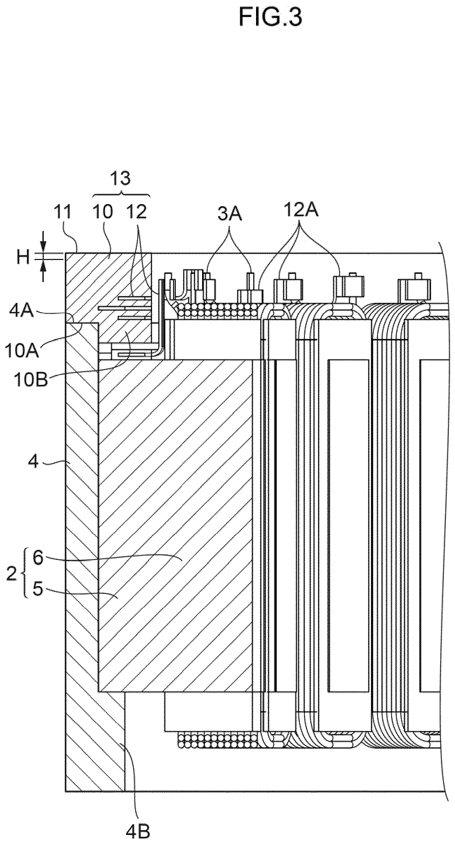

The case 4 is a member for surrounding the outer periphery of the stator core 2, and may be configured from a high rigidity material such as, for example, a metal plate having a specific thickness. Various shapes may be adopted for the external profile of the case 4, such as a completely tubular shape without a bottom at either axial direction end, a bottomed tube shape having a bottom at one axial direction as illustrated in Fig. 1, or the like. The case 4 in the example of the present exemplary embodiment may be a bottomed tube shape set with an inner diameter to match an outer diameter of the stator core 2. Moreover, a support projection 4B (see Fig. 3) that forms a bottom may be formed at the inner peripheral face of the case 4 to support the stator core 2 in a state housed inside the case 4. Furthermore, an axial direction length of the case 4 may be set shorter than the axial direction length of the manufactured stator.

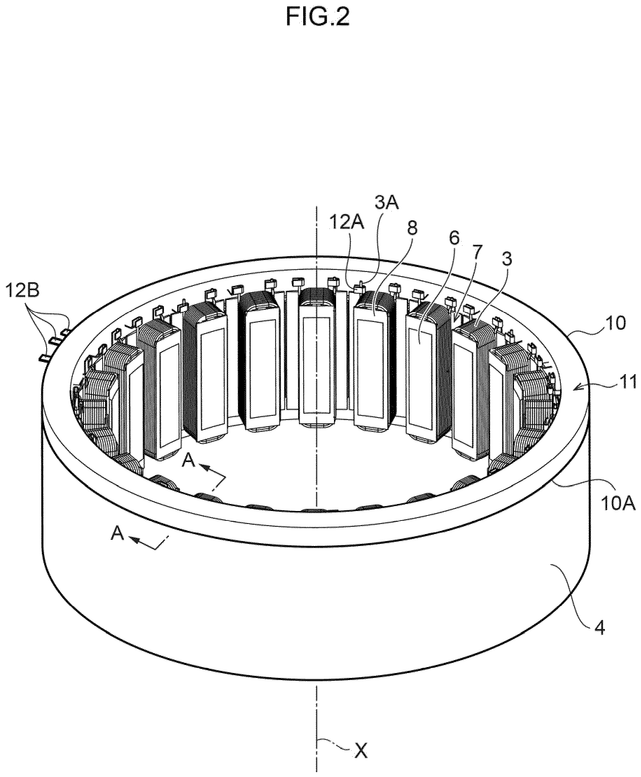

Fig. 2 is a perspective view illustrating a state in which a resin member has been attached to the stator assembly illustrated in Fig. 1. Fig. 3 is a cross-section sectioned along line A-A of Fig. 2. A ring-shaped resin member 10 is arranged at least at one of the two axial direction ends of the stator assembly 1 having the above configuration, as illustrated in Fig. 2. In the present exemplary embodiment, an example is illustrated in which the resin member 10 is arranged at one axial direction end of the stator assembly 1.

As illustrated in Fig. 2 and Fig. 3, the resin member 10 can be configured from a resilient resin formed in a circular ring shape so as to at least cover an axial direction one end portion 4A of the case 4. A case contact face 10A that opposes an end face of the case 4 may be configured as a substantially flat face on the circular ring-shaped resin member 10 so as to contact the entire periphery of the end face of the case 4. Moreover, a step portion 10B to fit inside the one end portion 4A of the case 4 may be provided at the inside of the case contact face 10A of the resin member 10, and the resin member 10 may be attached by fitting this step portion 10UB inside the case 4. Note that the case 4 and the resin member 10 do not necessarily have a fitting structure using the step portion 10B as described above. Specifically, for example, an adhesive or the like may be employed to fix the one end portion 4A of the case 4 and the case contact face 10A together, or a structure may be adopted in which the resin member 10 is simply placed on the one end portion 4A of the case 4 without being fixed thereto. Moreover, although the resin member 10 of the present exemplary embodiment is illustrated for a circular ring-shaped example, there is no limitation to being a perfectly circular ring shape. Specifically, the resin member 10 may be matched to the shape of the stator assembly 1 or the like and, for example, may have an elliptical shape, may be a ring shape having a projection and a recess that extend in a radial direction at respective parts of the outer peripheral face and the inner peripheral face thereof, or may be ring shape formed with an indentation or a through hole at a freely selected position thereon.

A resilient insulating resin, and in particular a thermoplastic resin, may be employed in the resin member 10. Polyphenylene sulfide (PPS) is, for example, preferably adopted as such a thermoplastic resin. Note that examples of the thermoplastic resin include not only PPS, but also polyethylene terephthalate (PET), polypropylene (PP), polyether ether ketone (PEEK), polybutylene terephthalate (PBT), a liquid crystal polymer (LCP), polyphthalamide (PPA), polyether ketone (PEK), polysulfone (PSU) / polyethersulfone (PES), polyether imide (PEI), polyamide-imide (PAI), modified polyphenylene ether (m-PPE), polyamide (PA), and combinations thereof, and in some cases fibers such as glass fibers may be added thereto. Further examples that may be adopted therefor include other resins such as polyimide (PI), fluororesins, polycarbonate (PC), polybutylene terephalate (PBT), polyethylene (PE), polyoxymethylene (POM), polystyrene (PS), polyarylate (PAR), polysulfone (PSF), ABS resins, polyethylene terephthalate (PET), and the like employed either singly or in a combination thereof.

Moreover, a crush portion 11, which is a portion mainly crushed when pressed by a mold 20, described later, may be provided to the face of the resin member 10 on the opposite side to the case contact face 10A. The crush portion 11 may, for example as illustrated in Fig. 3, be a zone that extends in an axial direction by a specific length H (for example from 0.1 mm to 0.5 mm) on a face of the resin member 10 on the opposite side to the case contact face 10A. Note that in the present exemplary embodiment, in order to facilitate understanding, in the following explanation the crush portion 11 is defined as being the portion of the resin member 10 where the maximum pressing force acts when pressed by the mold 20. However, the portion of the resin member 10 crushed when pressed by the mold 20 is not limited to only the portion indicated as the crush portion 11 and, for example, the present disclosure also encompasses the resin member 10 as a whole in cases in which resin member 10 is crushed substantially evenly.

The length H of the crush portion 11 may be set in consideration of axial direction undulations and variation that might be present in the case 4 and the resin member 10. As a specific example, in cases in which, for example, the dimensional tolerance in the axial direction of the case 4 and the resin member 10 are each respectively set to ± 0.1 mm, then the length H of the crush portion 11 is set to a value larger than the sum thereof and may, for example, be set to 0.3 mm. Leakage of resin and variation in product dimension can be suppressed even when there is some undulations and variation in the case and the resin member 10 by adjusting the length H of the crush portion 11 in this manner. Note that the axial direction length of the resin member 10 excluding the crush portion 11 is a length that may be adjusted such that a length when added to the axial direction length of the case 4 when attached to the one end portion 4A of the case 4 is the same as the axial direction length of the stator being manufactured.

The stator assembly 1 may further include plural bus-bars 12 for performing electrical connection of the coils 3. The bus-bars 12 may be configured including one end portions 12A electrically connected to the coil ends 3A that extend out from the slots 7, and other end portions 12B on the opposite side to the one end portions 12A and extending outside the stator assembly 1. At least part of intermediate portions of the bus-bars 12 may be guided inside the resin member 10. The bus-bars 12 and the resin member 10 may accordingly be integrally formed as a bus-bar unit 13. In other words, the resin member 10 according to the present exemplary embodiment may be formed by utilizing part of the bus-bar unit 13. The bus-bars 12 of the present exemplary embodiment may be plural substantially circular arc shaped wiring to match the phases of the coils 3.

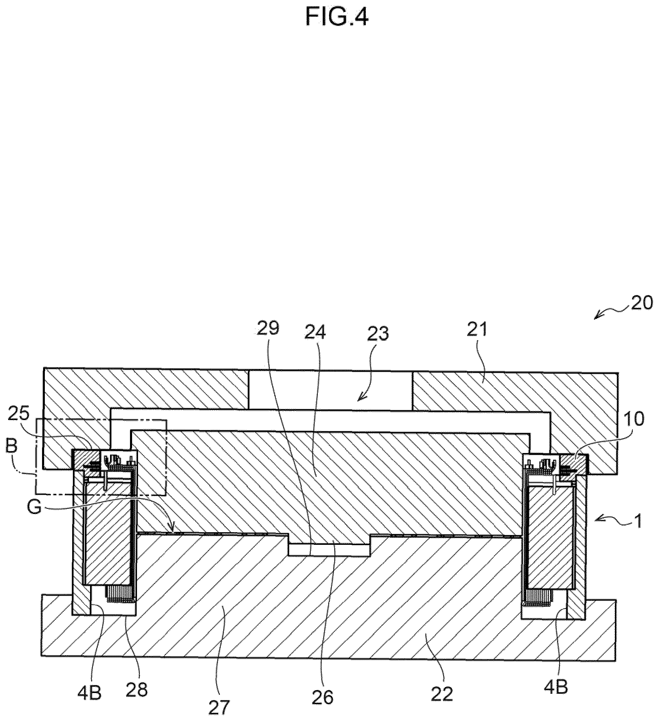

Fig. 4 is a schematic cross-section illustrating an example of a device to execute the stator manufacturing method according to the first exemplary embodiment of the present disclosure. In the stator manufacturing method according to the present exemplary embodiment, as illustrated in Fig. 4, resin molding can be implemented using the mold 20. The mold 20 may include an upper mold 21 and a lower mold 22. The resin molding may be executed by clamping the stator assembly 1 including the above described resin member 10 in the axial direction using the upper mold 21 and the lower mold 22.

The upper mold 21 may be configured from a substantially circular plate shaped member having an injection pathway 23 provided inside, and may have an outer diameter dimension that is larger than an outer diameter of the stator assembly 1. The upper mold 21 may be provided with a substantially circular pillar shaped upper projection 24 provided at a central portion of a face opposing the lower mold 22, and with an upper indentation 25 that is formed in substantially circular ring shape so as to surround the outer periphery of positions where the upper projection 24 is provided and that is capable of housing part of the stator assembly 1 including the above described resin member 10. The injection pathway 23 may be formed inside the upper mold 21 so as to connect between a face of the upper mold 21 on the opposite side to the face thereof opposing the lower mold 22, and one or plural locations inside the upper indentation 25. A surface on the leading end side of the upper projection 24 is configured by a substantially flat face, and a positioning projection 26 for performing positioning in a direction intersecting with the axial direction of the upper mold 21 and the lower mold 22 may be provided to a substantially central portion of the upper projection 24.

The lower mold 22 may be configured from a substantially circular plate shaped member having an external dimension about the same as the upper mold 21. The lower mold 22 may be provided with a lower projection 27 provided at a center portion of the face opposing the upper mold 21 and having a leading end portion capable of contacting a leading end portion of the upper projection 24, and a lower indentation 28 that is formed in a substantially circular ring shape so as to surround the outer periphery of positions where the lower projection 27 is provided and that is capable of housing part of the stator assembly 1 including the above described resin member 10. A surface on the leading end side of the lower projection 27 is configured by a substantially flat face similar to the surface on the leading end side of the upper projection 24, and a positioning indentation 29 into which the positioning projection 26 of the upper mold 21 fits may be provided to a substantially central portion of the lower projection 27. Note that although in the present exemplary embodiment and example is illustrated in which both the upper mold 21 and the lower mold 22 are formed by substantially circular plate shaped members, the external profile of the upper mold 21 and the lower mold 22 is not limited thereto, and they may, for example, be formed as square shaped members.

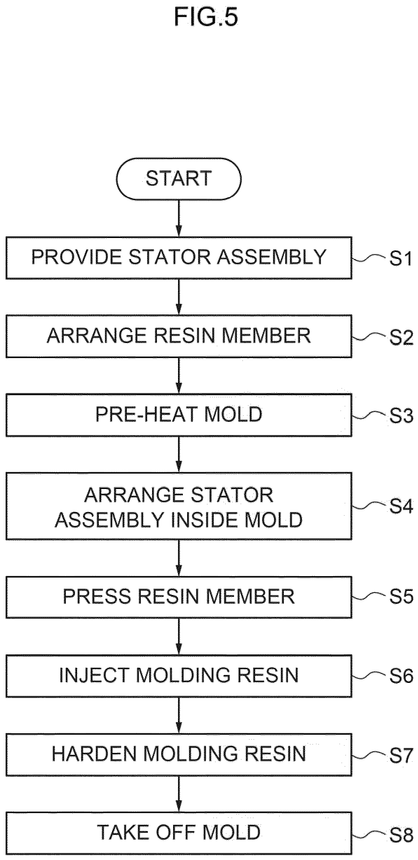

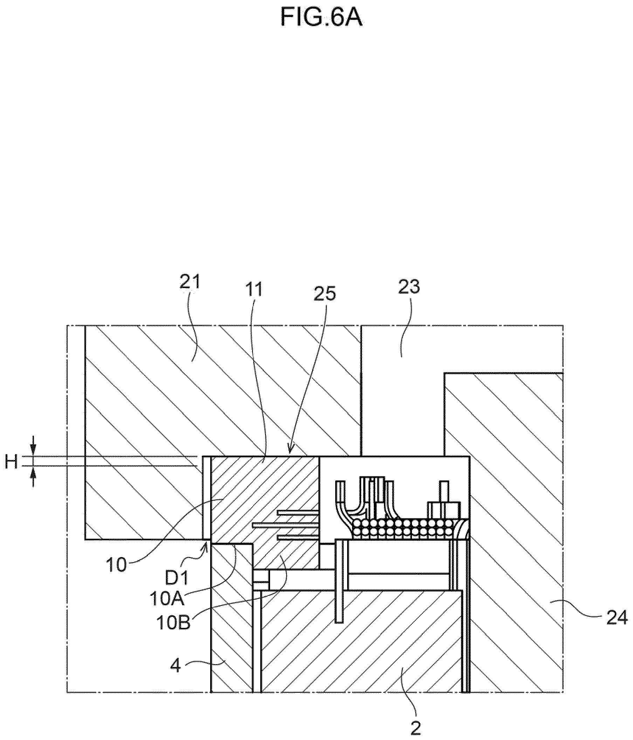

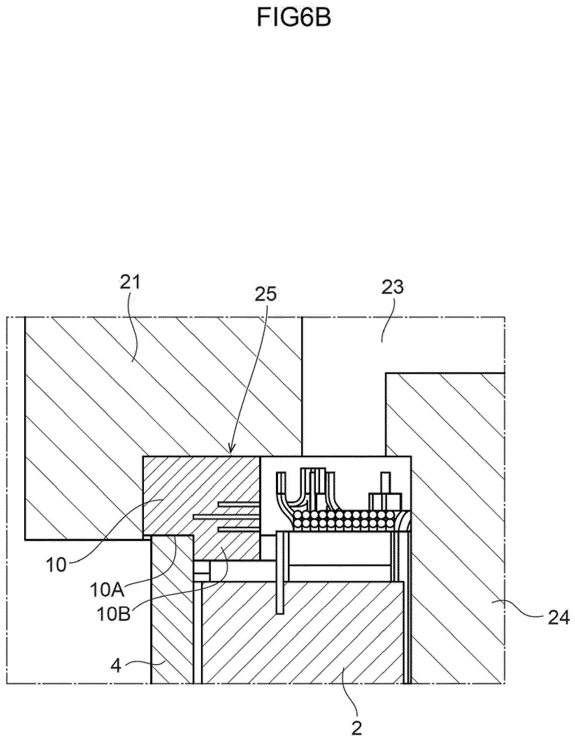

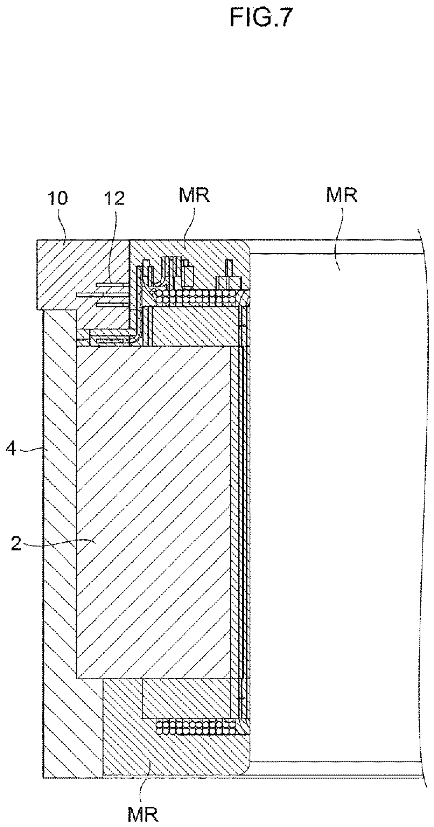

Fig. 5 is a flowchart illustrating an example of the stator manufacturing method according to the first exemplary embodiment of the present disclosure. Figs. 6 are expanded views on arrow B of Fig. 4, with Fig. 6A illustrating a state prior to the mold pressing the resin member and Fig. 6B illustrating a state in which the mold has pressed the resin member. Explanation follows regarding an example of the stator manufacturing method according to the present exemplary embodiment for performing resin molding on the above described stator assembly 1 using the same mold 20 as above described. Note that in the following description, an example will be described of a case in which transfer molding is performed as a specific method of resin molding, however the present disclosure is not limited thereto. Cast molding and injection molding may be adopted as specific resin molding methods. Moreover, a thermoset resin such as an epoxy resin or phenolic resin or a thermoplastic resin may be employed as a molding resin MR (see Fig. 7) employed in the resin molding.

In the stator manufacturing method of the present disclosure, as illustrated in Fig. 5, first a stator assembly 1 such as illustrated in Fig. 1 is provided (step S1). Next the resin member 10 is arranged at one axial direction end portion of the stator assembly 1 (step S2). When this is being performed, the case contact face 10A of the resin member 10 may be contacted against the one end portion 4A of the case, and the resin member 10 may be substantially fixed to the stator assembly 1 by a step portion 10B being fitted inside the case 4.

In the present exemplary embodiment pre-heating of the mold 20 (step S3) is performed either after steps S1 and S2, or in parallel to these steps. This pre-heating may be executed at least on part of the mold 20 including at least the portion thereof for contacting against the resin member 10. In the present exemplary embodiment, the entire upper mold 21 is pre-heated.

When the resin member 10 has been attached to the stator assembly 1and also pre-heating has been executed on the upper mold 21, next the stator assembly 1 including the resin member 10 is arranged inside the mold 20 in the state illustrated in Fig. 3, namely so as to be clamped between the upper mold 21 and the lower mold 22 (step S4). When this is performed, the upper mold 21 may, as illustrated in Fig. 6A, be in a state in which part of the upper indentation 25 is contacted against the crush portion 11 of the resin member 10. In such cases a slight gap G (see Fig. 4) is formed between the leading end of the upper projection 24 of the upper mold 21 and the leading end of the lower projection 27 of the lower mold 22 (see Fig. 4).

When the stator assembly 1 has been arranged in the mold 20, next the crush portion 11 of the resin member 10 is pressed by the upper mold 21 (step S5) by at least one of the upper mold 21 or the lower mold 22 being moved in the direction such that both members are brought relatively closer to each other. The gap G is filled by this movement, the upper projection 24 and the lower projection 27 make contact, and the stator assembly 1 arranged between the upper mold 21 and the lower mold 22 is clamped at a specific pressure inside the mold 20. The gap G and the axial direction length H of the crush portion 11 are substantially the same as each other and, for example, may be 0.3 mm. The upper mold 21 is accordingly moved such that the entire crush portion 11 is crushed.

Due to the upper mold 21 being pre-heated at step S3 to a temperature substantially the same as, or higher than, the softening temperature of the resin member 10, the crush portion 11 crushed by the upper mold 21 is softened by heat from the upper mold 21, and moves toward the inner peripheral side or the outer peripheral side of the resin member 10. A ring-shaped space D1 to allow the softened resin member 10 to move toward the outside may be set in the upper indentation 25 of the upper mold 21 at an outer peripheral portion of the resin member 10. This means that most of the crush portion 11 pressed at step S5 thereby moves toward the outer peripheral side of the resin member 10 so as to fill the space D1 portion, as illustrated in Fig. 6B. Note that although an example is illustrated in the present exemplary embodiment of a case in which the crush portion 11 is softened by pre-heating the upper mold 21, pre-heating of the upper mold 21 is not necessarily performed. In such cases, for example, the crush portion 11 may be softened before the stator assembly 1 is arranged in the mold 20, or a mode may be adopted in which the crush portion 11 is plastically deformed by pressing pressure of the upper mold 21 alone.

Moreover, the axial direction length between the upper indentation 25 and the lower indentation 28 in a state in which the upper projection 24 and the lower projection 27 have been brought into contact may be set so as to be the same as a setting length of the stator to be manufactured. The stator assembly 1 clamped between the upper indentation 25 and the lower indentation 28 is thereby clamped by the mold 20, enabling adjustment to a desired height. In other words, the axial direction length of the stator manufactured by the method according to the present exemplary embodiment is able to be decided based on the dimensions of the mold 20.

When the stator assembly 1 has been clamped inside the mold 20 and is being retained at a specific dimension, next injection of the molding resin MR starts (step S6). Injection of the molding resin MR is performed by actuating a feed source connected to the injection pathway 23, for example a plunger, and injecting the molding resin MR via the injection pathway 23 mainly into the slots 7. Due to the upper mold 21 being pressed against the resin member 10 at step S5, these portions are placed in liquid-tight contact by the resilient force of the resin member 10, and so the molding resin MR that has been injected does not leak outside. Note that reference here to liquid-tight indicates a tightly shut state, to an extent that gas is able to pass through but liquid does not pass through.

When injection of the molding resin MR has been completed, the injected molding resin MR is hardened (step S7). Hardening of the molding resin MR may be performed by heating the molding resin MR using a known heating means (for example, by actuating a heater arranged inside the mold 20). When hardening of the molding resin MR has been completed, the mold 20 is taken off the stator assembly 1 (step S8), with this completing one cycle of manufacturing steps.

Fig. 7 is a cross-section illustrating a state after resin molding has been performed on the stator assembly illustrated in Fig. 3. The stator assembly 1 that has been subjected to resin molding through the cycle of steps described above is in a state in which all faces at the peripheral inside of the case 4 and the resin member 10 are covered by the molding resin MR, as illustrated in Fig. 7. Particular attention should be paid to a large part of the crush portion 11 moving toward the outer peripheral face or the inner peripheral face of the resin member 10 in the resin member 10 of the stator assembly 1 illustrated in Fig. 7. This means that the crush portion 11 moves only by the amount pressed by the upper mold 21, and the stator assembly 1 obtained thereby has been molded with the same dimension to the dimension between the upper indentation 25 and the lower indentation 28 of the mold 20. This thereby enables, just by setting the dimension between the upper indentation 25 and the lower indentation 28 of the mold 20 to the same as the product dimension of the stator to be manufactured, a stator of the desired product dimension to be obtained merely by performing resin molding. This means that, for example, there is no longer a need to precisely adjust the dimensions of the stator assembly 1 prior to performing resin molding.

As described above, by employing the resin member 10 in the stator manufacturing method according to the present exemplary embodiment, the dimensional accuracy of the product after resin molding can be raised, while suppressing the dimensional accuracy demanded in other members to a low level. In addition thereto, resin can be prevented from leaking out when resin molding is performed by the resin member 10 having a specific resilience being contacted against the mold 20.

The stator manufacturing method of the present disclosure, and the resin member 10 and the like illustrated in the first exemplary embodiment described above, may also be modified. Description follows regarding a number of modified examples of the stator manufacturing method according to the present exemplary embodiment. Note that in the following modified examples, the same reference numerals will be appended to similar portions to those of the configuration according to the first exemplary embodiment described above and explanation thereof will be omitted, with description focusing only on the portions modified from the first exemplary embodiment described above. Moreover, some of the modified examples described below may be applied in combination, within a range maintaining the function thereof.

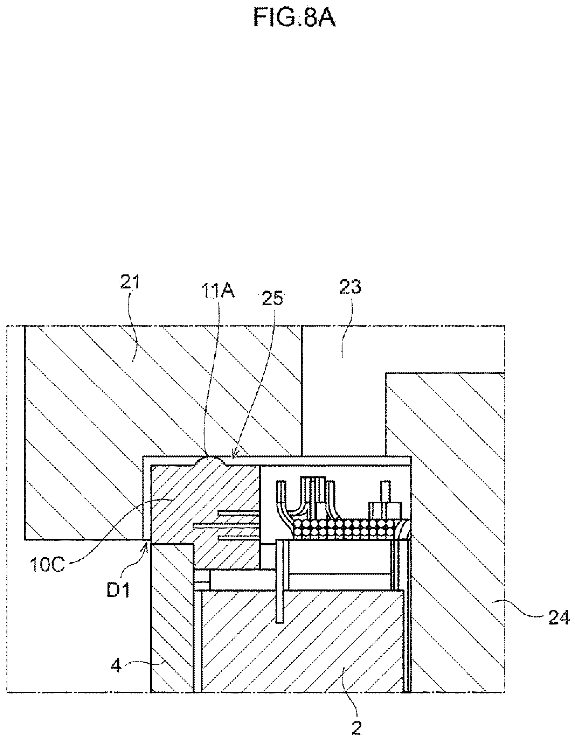

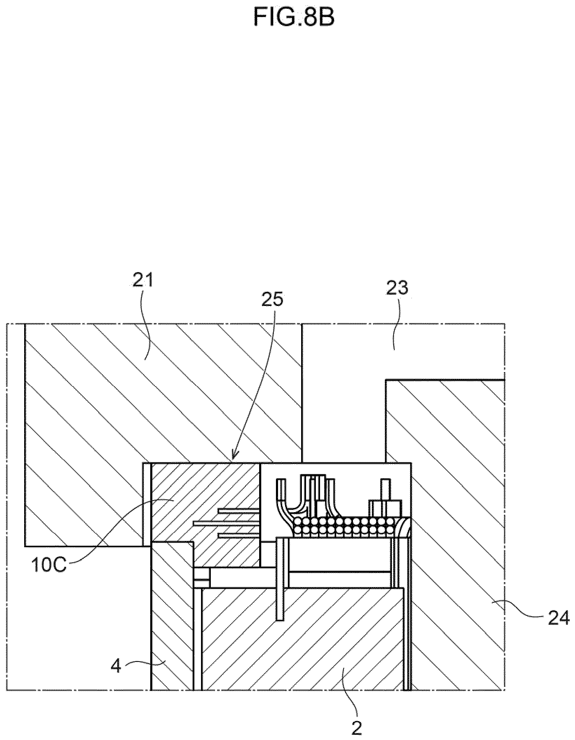

Figs. 8 are expanded diagrams corresponding to Figs. 6 and illustrating a first modified example of the method according to the first exemplary embodiment, with Fig. 8A illustrating a state prior to the mold pressing the resin member, and Fig. 8B illustrating a state in which the mold has pressed the resin member. In the first exemplary embodiment described above, an example was illustrated in which the crush portion 11 of the resin member 10 was formed so as to extend the entire face on the opposite side to the case contact face 10A by the specific length H, with this end face formed as a flat face. However in a resin member 10C of the first modified example, a configuration including a ring-shaped projection 11A as illustrated in Fig. 8A is adopted in place thereof. The ring-shaped projection 11A is an example of a first ring-shaped projection, and may be configured by part of the resin member 10C, and may be formed in a circular ring shape around the entire periphery of the face on the opposite side to the case contact face 10A. Moreover, the ring-shaped projection 11A in Fig. 8A is illustrates an example of which only one is formed thereof, however plural may be formed thereof, spaced apart at a specific spacing. Moreover, the height of the ring-shaped projection 11A is not necessarily uniform around the circumferential direction. Similar applies to a ring-shaped projection 11B and a ring-shaped projection 4C described later.

As described above, the resin member 10C serves as a crush portion, and by adopting a configuration including the ring-shaped projection 11A on the face on the opposite side to the case contact face 10A, the volume of the portion crushed by the mold 20 can be made smaller than the crush portion 11 described above. This means that the amount of resin that moves toward the outer periphery or the inner periphery of the resin member 10 when pressed by the mold 20 becomes less. This means that the amount by which the resin member 10C moves toward the space D1 provided in the upper mold 21 is reduced, as illustrated in Fig. 8B, and the outer diameter of the resin member 10C is not liable to change. Moreover, the ring-shaped projection 11A portion is preferentially crushed when the resin member 10C is pressed by the mold 20, and so the ring-shaped projection 11A is reliably crushed around the entire periphery, enabling the liquid-tightness of this portion to be predictably secured.

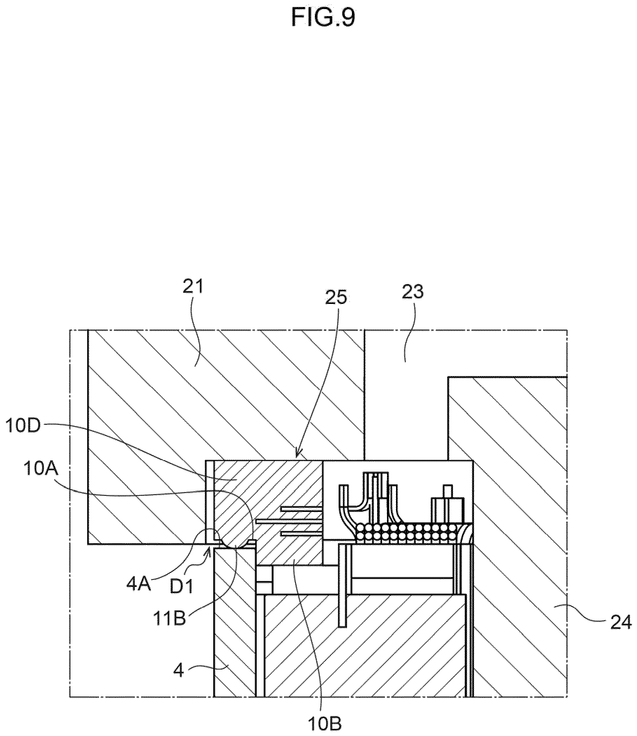

In the above first modified example an example had been illustrated of a case in which the ring-shaped projection 11 A is provided as an example of a first ring-shaped projection on a face on the opposite side of the resin member 10C to the case contact face 10A, however the position where the first ring-shaped projection is provided is not limited to the above position. Fig. 9 is an expanded diagram corresponding to Figs. 6 and illustrates a second modified example of the method according to the first exemplary embodiment. As illustrated in Fig. 9, a resin member 10D of the second modified example employs a ring-shaped projection 11B that projects downward on the case contact face 10A of the resin member 10D as another example of a first ring-shaped projection. In cases in which the resin member 10D including the ring-shaped projection 11B is employed, first the ring-shaped projection 11B is preferentially crushed when the stator assembly 1 is clamped inside the mold 20. Note that in cases in which the ring-shaped projection 11B is formed to the case contact face 10A, to secure liquid-tightness of the contact face of the resin member 10D for contacting the upper mold 21, the height direction length of the resin member 10D may be adjusted such that this contact face is also crushed when clamped in the mold 20, or this contact face may be surface machined in advance so as to match the face of the upper mold 21 being contacted.

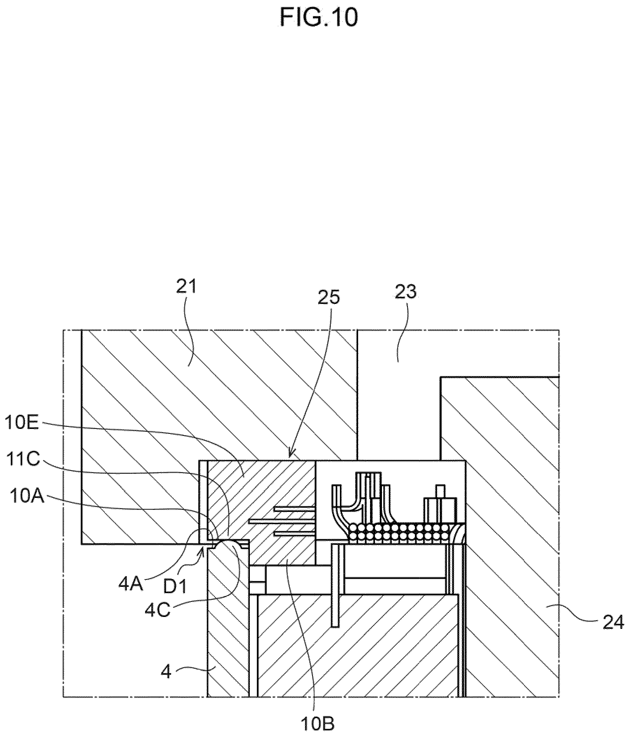

Moreover, although in the second modified example described above a case is illustrated in which a portion crushed is provided at the case contact face 10A side by providing the ring-shaped projection 11B to the case contact face 10A of the resin member 10D, similar advantageous effects can be obtained by providing a projection on the case 4 side that is similar to the ring-shaped projection 11B. Fig. 10 is an expanded diagram corresponding to Figs. 6 and illustrates a third modified example of the method according to the first exemplary embodiment. In the third modified example, a ring-shaped projection 4C may be provided to the one end portion 4A of the case 4 as an example of a second ring-shaped projection. The projection 4C presses the case contact face 10A of a resin member 10E when the resin member 10E is pressed by the upper mold 21, enabling a function in which the case contact face 10A is preferentially crushed. In other words, in the present modified example the case contact face 10A portion of the resin member 10E functions as a crush portion 11C. Note that the resin member 10E of the present modified example may include configuration substantially similar to that of the resin member 10 according to the above exemplary embodiments.

Adopting the configurations illustrated for the second and third modified examples enable liquid-tightness between the case 4 and the resin members 10D and 10E to be predictably secured. Note that the ring-shaped projection 4C serving as an example of the second ring-shaped projection may be adopted irrespective of whether or not there is a ring-shaped projection 11A or 11B serving as an example of the first ring-shaped projection.

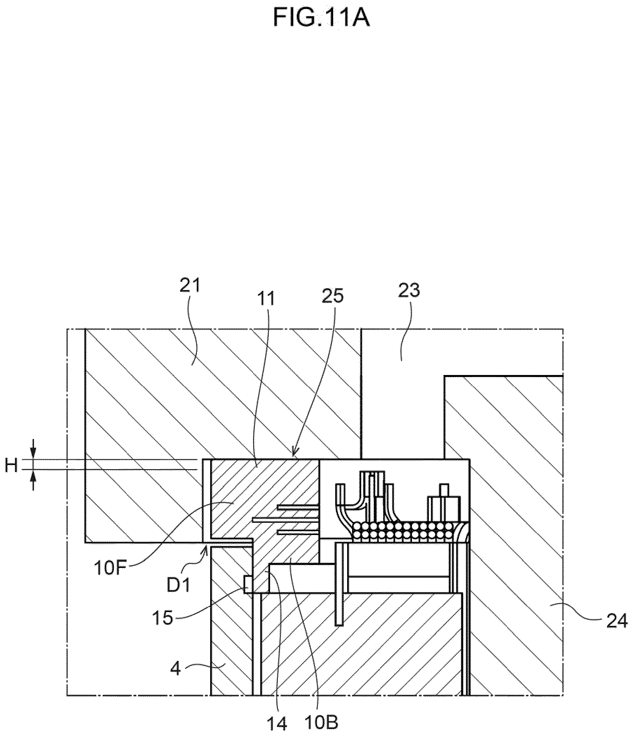

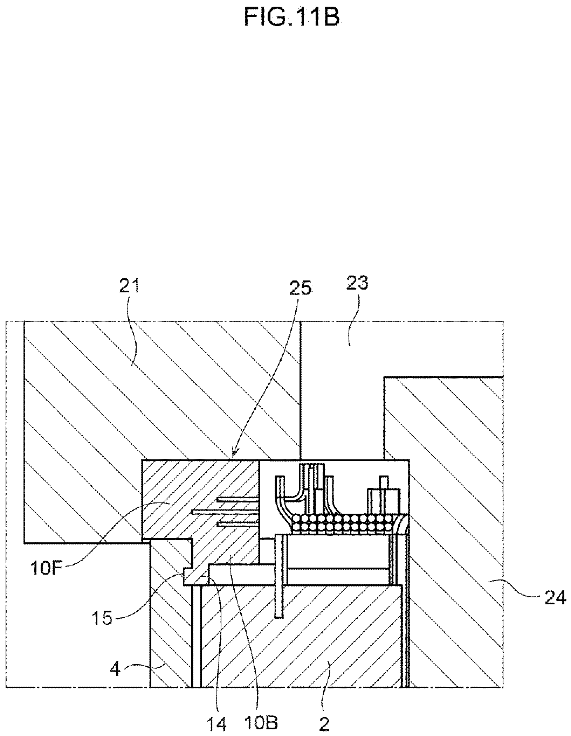

Figs. 11 are expanded diagrams corresponding to Figs. 6 and illustrate a fourth modified example of the method according to the first exemplary embodiment, with Fig. 11A illustrating a state prior to the mold pressing the resin member, and Fig. 11B illustrating a state in which the mold has pressed the resin member. The first exemplary embodiment described above is an example illustrated in which, when arranging the resin member 10 in the stator assembly 1, the step portion 10B provided to the resin member 10 is fitted together with the inner peripheral face of the case 4 and both parties fixed together, however a fixing structure described in the following fourth modified example may be employed in place thereof. In the fourth modified example, as illustrated in Fig. 11A, a tongue piece 14 that extends along the inner peripheral face of the case 4 is formed to the leading end of the step portion 10B of a resin member 10F, and an indentation 15 is formed at a position on the inner peripheral face of the case 4 near to the one end portion 4A of the case. When the resin member 10F provided with the tongue piece 14 is attached to the case 4, in order to make contact between the leading end of the tongue piece 14 and an end face of the stator core 2, attachment is made in a state in which there is a gap formed between the one end portion 4A of the case 4 and the case contact face 10A. Note that the tongue piece 14 may be formed in a ring shape similar to the step portion 10B, and may be formed in a form in which plural arms extend downward from the step portion 10B. The indentation 15 may be arranged to match the position of the tongue piece 14.

In cases in which resin molding is performed to a stator assembly equipped with the configuration described above, at step S5 of the first exemplary embodiment, a step as illustrated in Fig. 11B is executed to press the resin member 10F against the case 4 using the upper mold 21, and to fit the leading end of the tongue piece 14 inside the indentation 15. When the resin member 10F is pressed by the upper mold 21, the resin member 10F is moved in the direction to approach the case 4 either before or at the same time as the crush portion 11 is being crushed. Then during this movement, due to the leading end portion of the tongue piece 14 being restricted from moving in the axial direction by the end face of the stator core 2, the leading end portion of the tongue piece 14 moves so as to escape from this end face toward the indentation 15 and fits into the indentation 15.

Due to adopting the above described configuration of the tongue piece 14 and the indentation 15, the leading end of the tongue piece 14 is fitted together with the indentation 15 and the resin member 10F and the case 4 are fixed together during the course of performing resin molding, and so there is no longer a need to execute a separate step to fix the resin member 10F and the case 4 together. Moreover, due to the tongue piece 14 being fitted together with the indentation 15, the two parts can be firmly fixed even in cases in which there is low cohesion between the resin member 10F and the case 4 due to the effects of undulations or the like.

Moreover, in the first exemplary embodiment and each of the modified examples, examples have been illustrated in which the case 4 is formed from a high rigidity member, for example metal, and the resin member 10, 10C to 10F is brought into contact with the case 4, however the case 4 may be formed with a resin, for example with a resin similar to that of the resin member 10, 10C to 10F described above. In such cases, the resin members 10, 10C to 10F may each form part of the case 4. Configuring the resin members 10, 10C to 10F as part of the case 4 enables a reduction in the number of components and manufacturing man-hours. Note that in cases in which the resin members 10, 10C to 10F are each configured from part of the case 4, the axial direction length of the case 4 may be set longer than the product dimension, similarly to the resin member 10, 10C to 10F described in the above exemplary embodiment and each of the modified examples. In addition thereto, a projection may also be provided to an end portion of the resin member configured by part of the case 4, similarly to the projection 11 A provided to the resin member 10C of the first modified example.

The resin members 10, 10C to 10F illustrated above in the first exemplary embodiment and each of the modified examples each include the case contact face 10A that contacts the one end portion 4A of the case 4, and are configured such that at least part thereof is crushed when pressed by the mold 20. On the other hand, the resin member utilized in the method of the present disclosure does not necessarily contact an end portion of the case. Brief description follow regarding a stator manufacturing method employing a resin member that does not contact the one end portion 4A of the case 4 as a second exemplary embodiment of the present disclosure. Note that the second exemplary embodiment illustrated below may employ each configuration described above in the method according to the first exemplary embodiment described, except for in the shape of the resin member, and specifically the same overall configuration may be employed for a stator assembly and for a device to execute the stator manufacturing method. The same reference numerals will be appended to similar portions to those described in the first exemplary embodiment and explanation thereof will be omitted, with description focusing only on the portions modified from the first exemplary embodiment described above.

### Second Exemplary Embodiment

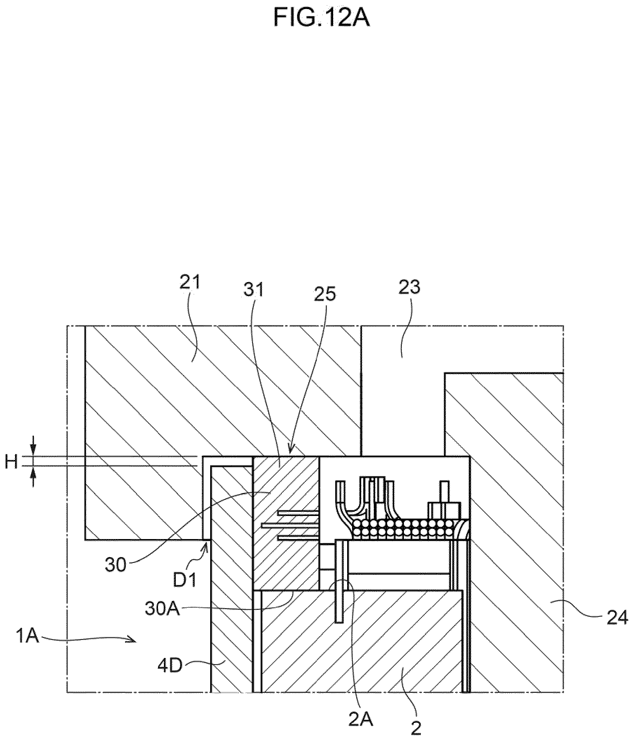

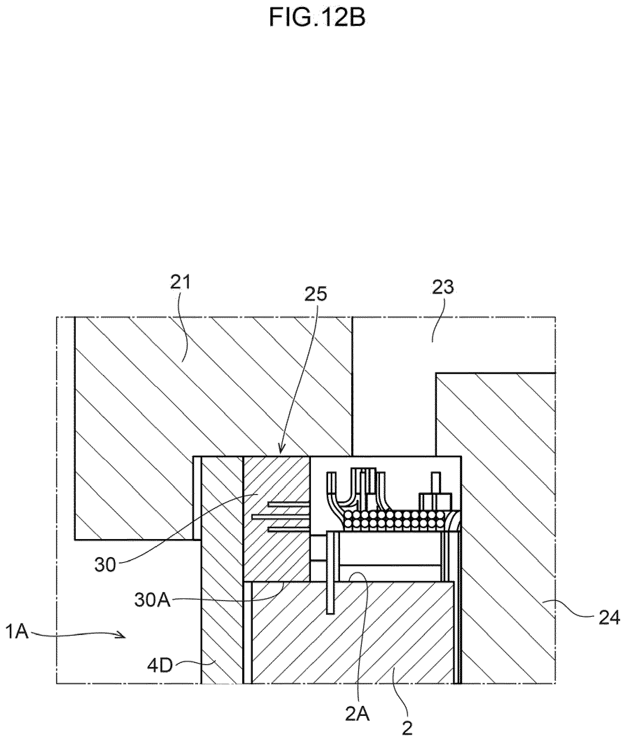

Figs. 12 are expanded diagrams corresponding to Figs. 6 and illustrate an example of a device to execute the stator manufacturing method according to the second exemplary embodiment of the present disclosure, with Fig. 12A illustrating a state prior to the mold pressing the resin member, and Fig. 12B illustrating a state in which the mold has pressed the resin member. In the stator manufacturing method according to the present exemplary embodiment, a resin member 30 prepared for such manufacture differs from that of the first exemplary embodiment in that the structure employed does not contact a one end portion 4A of a case 4D, but contacts an axial direction one end portion 2A of the stator core 2.

The resin member 30 can be configured from a resilient resin formed in a circular ring shape so as to cover an axial direction one end portion 2A of the stator core 2. A stator core contact face 30A of the circular ring-shaped resin member 30 for contacting the stator core 2 is able to contact the stator core 2 mainly around the entire periphery of a portion configuring a yoke 5.

In relation to the above described structure of the resin member 30, the case 4D included in a stator assembly 1A according to the present exemplary embodiment may include a one end portion configured with part thereof extending to as to partially cover the outside of the resin member 30. The inner peripheral face of the case 4D and the outer peripheral face of the resin member 30 may be in a closely adhered state. The resin member 30 having at least part thereof covered at the outside by the case 4D is able to be supported by the one end portion 2A of the stator core 2 and the inner peripheral face of the case 4D. The face of the resin member 30 on the opposite side to the stator core contact face 30A is able to function as a crush portion 31 that is a portion mainly crushed when pressed by the mold 20. A length H of the crush portion 31 may be set in consideration of axial direction undulations and variation that might be present in the stator core 2 and the resin member 30. As a specific example, for example in a case in which the axial direction dimensional tolerances of the stator core 2 and the resin member 30 are each respectively set to ± 0.1 mm, then the length H of the crush portion 31 is set to a value larger than the sum thereof and may, for example, be set to 0.3 mm.

When resin molding the stator assembly 1A having one axial direction end portion supporting the resin member 30, the cycle of steps illustrated in Fig. 5 may be executed similarly to in the first exemplary embodiment. For details regarding this cycle of steps reference may be made to the content described in the first exemplary embodiment, however a simple explanation thereof is that first the stator assembly 1A is provided (step S1). Next, the resin member 30 is arranged at the axial direction one end portion of the stator assembly 1A (step S2). When doing so the stator core contact face 30A of the resin member 30 is contacted against the one end portion 2A of the stator core 2.

Then after performing pre-heating of the mold 20 (step S3), the stator assembly 1A including the resin member 30 is arranged inside the mold 20 (step S4). When doing so, as illustrated in Fig. 12A, part of the upper indentation 25 of the upper mold 21 may arranged so as to be in a state of contact with the crush portion 31 of the resin member 30. Then at least one of the upper mold 21 or the lower mold 22 is moved so as to fill the gap G between the two, and to press the crush portion 31 of the resin member 30 (step S5).

The crush portion 31 pressed by the upper mold 21 at step S5 is crushed in the axial direction and becomes in a state of close adhesion to the upper mold 21, as illustrated in Fig. 12B. A liquid-tight state is thereby achieved between the resin member 30 and the upper mold 21. Then injection of molding resin MR is performed (step S6), the injected molding resin MR is hardened (step S7), and when hardening of the molding resin MR has been completed, the mold 20 is taken off the stator assembly 1 (step S8), thereby completing a cycle of the manufacturing steps.

As described above, in the stator manufacturing method according to the present exemplary embodiment too, the dimensional accuracy of the product after resin molding can be raised, while suppressing the dimensional accuracy demanded in each member to a low level due to employing the resin member 30. In addition thereto, resin can be prevented from leaking out when resin molding is performed due to the resin member 30 having a specific resilience being contacted against the mold 20.

In the second exemplary embodiment, an example is illustrated in which the stator assembly 1A includes the case 4D that covers part of the outer peripheral face of the stator core 2 and the outer peripheral face of the resin member 30, however in the stator manufacturing method according to the present exemplary embodiment, the resin molding may be executed even for a stator assembly without a case. As a modified example of the second exemplary embodiment, an example is accordingly illustrated below in which resin molding is performed to a stator assembly 1B without a case.

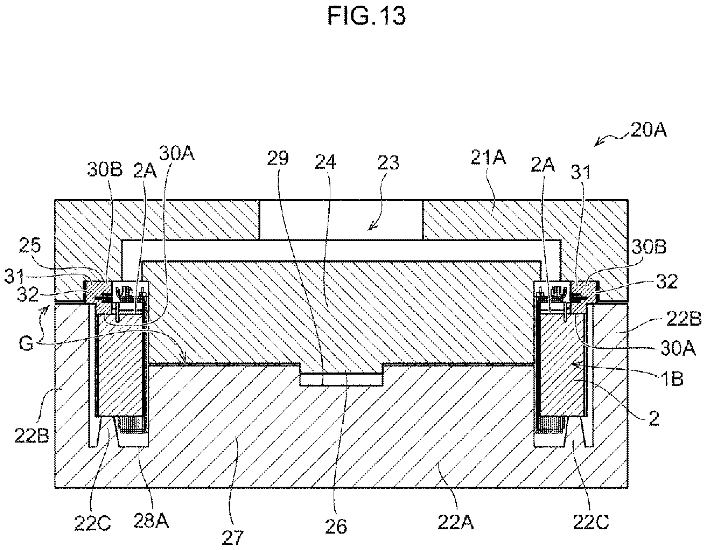

Fig. 13 is a schematic cross-section corresponding to Fig. 4 and illustrates a device to execute the stator manufacturing method according to a modified example of the second exemplary embodiment of the present disclosure. The stator assembly IB provided in the method according to the present modified example may, as illustrated in Fig. 13, not include the cases 4, 4D respectively illustrated in the first and second exemplary embodiments, and as a result thereof have an outer peripheral face that includes an exposed stator core 2.

A resin member 30B arranged on an axial direction one end portion 2A of the stator core 2 of the stator assembly 1B may be arranged so as to contact part of the one end portion 2A. The resin member 30B may, similarly to the resin member 30 explained in the second exemplary embodiment, be configured including a stator core contact face 30A that contacts the one end portion 2A of the stator core 2 and is provided at one end portion thereof. In addition thereto, a ring-shaped rib 32 may be provided to the resin member 30 so as to extend toward the outside from an outer peripheral face.

In order to execute resin molding on the stator assembly 1B configured as described above, a mold 20A employed in the stator manufacturing method according to the present modified example may include a upper mold 21A and a lower mold 22A as illustrated in Fig. 13. The upper mold 21A thereof may be configured with a structure substantially the same as the upper mold 21 described in the first exemplary embodiment.

The lower mold 22A may be configured as a substantially circular plate shaped or square shaped member having an external dimension about the same as the upper mold 21A. Similarly to the lower mold 22 described above, the lower mold 22A may include a lower projection 27 including a positioning indentation 29. In addition thereto, the lower mold 22A may include a lower indentation 28A that is formed in a substantially circular ring shape so as to surround the outer periphery of positions where the lower projection 27 is provided and that is able to house part of the stator assembly 1B described above, a side wall portion 28B upstanding from an outer edge of the lower indentation 28A toward the upper mold 21A, and plural support projections 28C for supporting the other end of the stator core 2 that rise from proper locations of the lower indentation 28A.

When the stator assembly 1B including the resin member 30B has been arranged inside the mold 20A equipped with the above configuration (see step S4 of Fig. 5), as illustrated in Fig. 13, portions of the resin member 30B other than the rib 32 are clamped between the one end portion of the stator core 2 supported by the support projections 28C at one end and the upper indentation 25 of the upper mold 21A. The rib 32 of the resin member 30B is clamped between the leading end face of the side wall portion 28B of the lower mold 22A and the upper indentation 25 of the upper mold 21A that opposes this leading end face. When in this state, by moving at least one of the upper mold 22A or the lower mold 22A so as to fill the gap G between the two and to the crush portion 31 of the resin member 30B, the entire resin member 30B is pressed by the upper mold 21A and crushed, and a liquid-tight state is achieved between the resin member 30B and the mold 20A due to the rib 32 being directly clamped at a specific pressure between the upper mold 21A and the lower mold 22A. This means that the molding resin MR does not leak outside the upper mold 21 when the molding resin MR is later injected.

Moreover, due to the stator core 2 being supported in a state in which the other end portion thereof is separated from the lower indentation 28A by the plural support projections 28C, the molding resin MR can be injected around the entire periphery of the stator core 2.

Employing the stator manufacturing method according to the modified example described above enables resin molding to be executed while preventing resin leakage even for the stator assembly 1B without a case. Moreover similarly to the other resin members 10, 10C to 10F, and 30, due to the resin member 30B being crushed by the mold 20A, the dimensional accuracy of the product after resin molding can be raised, while suppressing the dimensional accuracy demanded in each member to a low level.

The present disclosure is not limited to the exemplary embodiments described above, and various modifications may be implemented within a range not departing from the spirit of the present disclosure. All of such modifications are encompassed in the technical idea of the present disclosure. Moreover, each of the configuration elements in the present disclosure may be present singularly or present as two or more unless this gives rise to inconsistencies.

All references, including publications, patent applications, and patents, cited herein are hereby incorporated by reference to the same extent as if each reference were individually and specifically indicated to be incorporated by reference and were set forth in its entirety herein.

The use of the terms "a" and "an" and "the" and similar referents in the context of describing the disclosure (especially in the context of the following claims) is to be construed to cover both the singular and the plural, unless otherwise indicated herein or clearly contradicted by context. The terms "comprising," "having," "including," and "containing" are to be construed as open-ended terms (i.e., meaning "including, but not limited to,") unless otherwise noted. Recitation of ranges of values herein are merely intended to serve as a shorthand method of referring individually to each separate value falling within the range, unless otherwise indicated herein, and each separate value is incorporated into the specification as if it were individually recited herein. All methods described herein can be performed in any suitable order unless otherwise indicated herein or otherwise clearly contradicted by context. The use of any and all examples, or exemplary language (e.g., "such as") provided herein, is intended merely to better illuminate the disclosure and does not pose a limitation on the scope of the disclosure unless otherwise claimed. No language in the specification should be construed as indicating any non-claimed element as essential to the practice of the disclosure.

Preferred embodiments of this disclosure are described herein, including the best mode known to the inventors for carrying out the disclosure. Variations of those preferred embodiments may become apparent to those of ordinary skill in the art upon reading the foregoing description. The inventors expect skilled artisans to employ such variations as appropriate, and the inventors intend for the disclosure to be practiced otherwise than as specifically described herein. Accordingly, this disclosure includes all modifications and equivalents of the subject matter recited in the claims appended hereto as permitted by applicable law. Moreover, any combination of the above-described elements in all possible variations thereof is encompassed by the disclosure unless otherwise indicated herein or otherwise clearly contradicted by context.

## Claims

1. A stator manufacturing method, comprising:
a step of providing a stator assembly including a stator core having coils wound on a plurality of teeth projecting from a yoke, and a case surrounding an outer periphery of the stator core;
a step of arranging a ring-shaped resin member at least at one end portion in an axial direction of the case such that at least part of the resin member is crushed when pressed by a mold;
a step of clamping the stator assembly inside the mold with the resin member arranged at the at least one end portion in a state in which the resin member is pressed, and
a step of injecting a molding resin into the mold.

2. The stator manufacturing method of claim 1, wherein:
the resin member is configured from a thermoplastic resin; and
the stator manufacturing method further comprises a step of pre-heating at least part of the mold including a portion that will contact the resin member.

3. The stator manufacturing method of claim 1 or claim 2, wherein:
the resin member is a bus-bar unit; and
the stator assembly includes a plurality of bus-bars having one end portions electrically connected to end portions of the coils, with the bus-bars having other end portions that extend outside the stator assembly through the resin member.

4. The stator manufacturing method of any one of claims 1 to 3, wherein the resin member includes a first ring-shaped projection formed at least at one of a face that contacts the case or a face on an opposite side from the face that contacts the case.

5. The stator manufacturing method of any one of claims 1 to 4, wherein the case includes a second ring-shaped projection at a face that contacts the resin member.

6. The stator manufacturing method of any one of claims 1 to 5, wherein:
the resin member includes a tongue piece that extends along an inner peripheral face of the case, and an indentation able to accommodate entry of a leading end portion of the tongue piece is provided at the inner peripheral face of the case; and
the stator manufacturing method further comprises a step of using the mold to press the resin member against the case and to fit a leading end of the tongue piece into the indentation.

7. The stator manufacturing method of any one of claims 1 to 6, wherein the case is configured from a resin, and the resin member is part of the case.

8. A stator manufacturing method, comprising;
a step of providing a stator assembly including a stator core having coils wound on a plurality of teeth projecting from a yoke;
a step of arranging a ring-shaped resin member at least at one end portion in an axial direction of the stator core such that at least part of the resin member is crushed when pressed by a mold;
a step of clamping the stator assembly inside the mold with the resin member arranged at the at least one end portion in a state in which the resin member is pressed; and
a step of injecting a molding resin into the mold.

9. The stator manufacturing method of claim 8, wherein:
the mold includes an upper mold and a lower mold; and
the resin member includes a ring-shaped rib that is provided on an outer peripheral face of the resin member and that is directly clamped between the upper mold and the lower mold when clamped inside the mold.
